# EUROPÄISCHE PATENTSCHRIFT

(11) **EP 0 704 499 B1**
(45) Veröffentlichungstag und Bekanntmachung des Hinweises auf die Patenterteilung: **09.09.1998**
(21) Anmeldenummer: 95114636.4
(22) Anmeldetag: 18.09.1995
(51) Int. Cl.: C09C 1/24, C01G 49/06

(54) **Hochtransparente, gelbe Eisenoxidpigmente, Verfahren zu ihrer Herstellung sowie deren Verwendung**
Highly transparent, yellow iron oxide pigments, process for their preparation and their use
Pigments d'oxydes de fer jaunes, très transparents, procédé pour leur préparation et leur utilisation

(30) Priorität: 30.09.1994 DE 4434969
(43) Veröffentlichungstag der Anmeldung: 03.04.1996
(73) Patentinhaber: BAYER AG, 51368 Leverkusen (DE)
(72) Erfinder: Pitzer, Ulrike, Dr., D-47800 Krefeld (DE)

(56) Entgegenhaltungen:
- DE-A- 3 640 245
- GB-A- 2 271 766
- US-A- 4 348 240

## Beschreibung

Die vorliegende Erfindung betrifft ein Verfahren zur Herstellung gelber, hochtransparenter Eisenoxidpigmente mit hoher chemischer Reinheit, so erhältliche Eisenoxidgelbpigmente sowie deren Verwendung zur Einfärbung von Lacken und Kunststoffen.

Eisenoxidpigmente mit einer mittleren Teilchengröße von kleiner 0,1 µm werden als transparente Eisenoxidpigmente bezeichnet, da sie für sichtbares Licht durchlässig sind. Alternativ zur Teilchengröße wird auch häufig die spezifische Oberfläche als Maß für die Größe der Partikel verwendet. Insbesondere bei nadelförmigen Teilchen bietet sich dieses Maß an, um die Angabe von Teilchengrößen in verschiedenen Raumrichtungen zu vermeiden. Dabei sind Pulver mit spezifischen Oberflächen nach BET von mehr als 80 m²/g in der Regel als transparent zu bezeichnen. Hochtransparent sind Pigmente mit spezifischen Oberflächen von mindestens 100 m²/g.

Transparente Eisenoxidpigmente finden vor allem Verwendung bei der Herstellung von Effekt-Autolacken, Holzlasuren und zum Einfärben transparenter Kunststoffe.

Transparente, gelbe Eisenoxidpigmente werden in der Regel durch Fällung von Eisen(II)-hydroxiden oder -carbonaten im sauren oder alkalischen pH-Bereich und anschließende Oxidation zu Fe(III)-oxidhydroxiden synthetisiert. Die Fällung von gelbem α-FeOOH im alkalischen pH-Bereich ist in US-A 558 303 und US-A 2 558 304 beschrieben.

Die Herstellung unter Alkali-Überschuß führt zwar zu salzarmen und dadurch besser dispergierbaren Produkten, hat aber den Nachteil, daß neben den Eisenhydroxiden zahlreiche andere Hydroxide von Metallionen, die als Verunreinigungen in den technisch eingesetzten Eisensalzlösungen vorliegen, mit ausgefällt werden. Insbesondere ist die Ausfällung von Mn-Verunreinigungen zu nennen. Diese Verunreinigungen verursachen in den Gelbpigmenten schmutzige, grünstichige Farbtöne und in den durch Glühung aus den gelben Pigmenten gewonnenen Rotpigmenten braunstichige Farbtöne. Außerdem können die Gesamtgehalte an metallischen Verunreinigungen, je nach eingesetztem Rohstoff, so hoch sein, daß diese Pigmente z.B. nicht mehr in Kunststoffverpackungen für Lebensmittel eingesetzt werden können.

Die Herstellung von α-FeOOH-Pigmenten im sauren pH-Bereich hat den Vorteil, daß die Ausfällung von Fremdmetallverunreinigungen vermieden wird, auf der anderen Seite aber den Nachteil, daß die Pigmente selbst nach intensiver Waschung noch stark mit Anionen verunreinigt sind. Da die Herstellung in der Regel aus Eisensulfatlösungen erfolgt, sind hier insbesondere Sulfatverunreinigungen zu nennen. Dies führt sowohl bei den Gelbpigmenten als auch bei den daraus durch Glühung gewonnenen Rotpigmenten zu einer verschlechterten Dispergierbarkeit und damit - bei gleicher eingesetzter Dispergierenergie - zu schlechterer Transparenz im Vergleich zu alkalisch hergestellten Pigmenten.

In US-A 4 785 415 ist ein Verfahren zur Entfernung löslicher Metallkationen von Eisenoxidpigmenten beschrieben. Dabei werden nach einem sauren Fällverfahren hergestellte, transparente, gelbe Eisenoxidpigmente mit einer Lösung gewaschen, die eine Ligandenverbindung enthält, wobei die Leitfähigkeit des Pigmentes nach der Behandlung sehr gering ist. Nach diesem Verfahren lassen sich jedoch nicht die im Pigment fest eingebauten Metallverunreinigungen entfernen, die z.B. bei der Herstellung der Pigmente über alkalische Fällverfahren entstehen. Als Ligandenverbindung wird dabei, neben einer Vielzahl anderer Verbindungen, auch Ammoniak genannt. Die beschriebene Nachbehandlung von Pigmenten mit Ammoniak hat jedoch verschiedene Nachteile. So ist z.B. eine Waschung von Filterkuchen mit Ammoniak im großtechnischen Maßstab wegen der Giftigkeit kaum möglich. Außerdem ist bei einer Waschung von Filterkuchen im Großtechnischen nicht gewährleistet, daß der gesamte Produktquerschnitt in ausreichender Menge und für eine ausreichende Zeit mit der Ligandenverbindung in Berührung kommt, so daß keine gleichmäßige Produktqualität erzielt werden kann.

Weiterhin ist in US-A 4 758 415 eine Vorbehandlung von sauer hergestellten Gelbpigmenten vor der schon beschriebenen Waschung mit den Ligandenverbindungen durch Zufügen von NaOH zu der Herstellsuspension bei gleichzeitiger Oxidation beschrieben. Diese Alkalisierung der Herstellslurry hat jedoch den Nachteil, daß viele metallische Verunreinigungen, die sich aus dem Rohstoff noch in der Suspension befinden, noch mit ausgefällt werden, ähnlich wie es bei dem Fällverfahren im alkalischen pH-Bereich der Fall ist.

Aufgabe war es daher, gelbe, hochtransparente Eisenoxidpigmente herzustellen, die chemisch rein und damit sehr farbrein sind und die beschriebenen Nachteile der bisher bekannten Pigmente und technischen Verfahren nicht aufweisen.

Es wurde gefunden, daß man auch über Fällverfahren im sauren pH-Bereich vergleichsweise sehr gut dispergierbare, hochtransparente, gelbe Eisenoxidpigmente herstellen kann. Diese Pigmente unterscheiden sich von den bisher- bekannten hochtransparenten, gelben Pigmenten dadurch, daß sie chemisch rein sind.

Gegenstand dieser Erfindung sind auch Verfahren zur Herstellung von hochtransparenten, chemisch reinen, gelben Eisenoxidpigmenten, wobei
a) gelbe, hochtransparente Eisenoxidpigmente der α-FeOOH-Modifikation über Fäll- und Oxidationsverfahren ausgehend von wäßrigen Eisen(II)-sulfatlösungen so hergestellt werden, daß am Ende der Pigmentbildung der pH-Wert unterhalb 6, bevorzugt kleiner oder gleich pH 5 liegt, das Pigment abfiltriert oder absedimentiert wird, gewaschen und gegebenenfalls getrocknet wird und
b) die erhaltenen gelben Pigmente oder Pigmentfilterkuchen einer Natronlaugennachbehandlung unterzogen werden.

Die Herstellung der gelben, hochtransparenten Vorprodukte im sauren Milieu ist Stand der Technik. Sie erfolgt bevorzugt so, daß technische Eisen(II)-sulfatlösung vorgelegt wird, daraus durch Zugabe von alkalischen Fällungsmitteln und gegebenenfalls Keimmodifikatoren Eisen(II)-hydroxide oder -carbonate ausgefällt werden und diese zu Eisen(III)-oxidhydroxiden oxidiert werden. Die Temperatur bei der Fällung sollte möglichst tief gewählt werden, um zu sehr feinteiligen Gelbpigmenten zu gelangen; sie liegt vorzugsweise zwischen 15 °C und 45 °C. Als alkalisches Fällungsmittel wird bevorzugt NaOH eingesetzt. Aber auch andere alkalische Fällungsmittel, wie Na₂CO₃, NH₃, MgO und/oder MgCO₃, können ohne Probleme verwendet werden. Um die Feinteiligkeit der Pigmente zu erhöhen, können zusätzlich Keimmodifikatoren zugesetzt werden. Als Beispiele sind Phosphate, Metaphosphate oder Hydroxycarbonsäuren zu nennen. Die Oxidation des zweiwertigen zum dreiwertigen Eisen erfolgt bevorzugt mit Luft. Dabei ist eine intensive Begasung von Vorteil.

Nachdem das zunächst gebildete Pigment filtriert oder absedimentiert und gewaschen wurde, wird bevorzugt die Filterpaste in Natronlauge resuspendiert. Die Pigmentkonzentration beträgt dabei besonders bevorzugt 10 bis 60 g/l. Die Konzentration der Natronlauge sollte so gewählt werden, daß der pH-Wert der Suspension zwischen pH 10 und pH 14 liegt. In dieser Suspension wird das Pigment vorteilhaft solange gerührt, bis sich die salzartigen Verunreinigungen von der Oberfläche gelöst haben. Dazu sind Zeiten zwischen 15 min und 2 h ausreichend. Die Temperatur kann zwischen Raumtemperatur und dem Siedepunkt beliebig gewählt werden. Bevorzugt wird die NaOH-Nachbehandlung aber bei Raumtemperatur durchgeführt. Nach der NaOH-Nachbehandlung wird das Pigment filtriert, getrocknet und gegebenenfalls gemahlen.

Die Natronlaugennachbehandlung kann auch an getrockneten hochtransparenten, gelben Eisenoxidpigmenten durchgeführt werden. Dabei ist eine gute Dispergierung des Pigmentes in der Natronlauge sicherzustellen. Eine Verbesserung der Pigmenteigenschaften ist auch durch Waschung des primär hergestellten Filterkuchens mit Natronlauge möglich; dabei ist jedoch mit Produktinhomogenitäten zu rechnen, da die Waschung zumindest großtechnisch nur mit größerem Aufwand so gestaltet werden kann, daß alle Produktteile gleichmäßig mit Natronlauge in Berührung kommen.

Das nach der Natronlaugenbehandlung erhaltene Pigment, welches Gegenstand der Erfindung ist, besteht aus α-FeOOH mit niedrigem Gehalt an metallischen Verunreinigungen, insbesondere einem niedrigem Mn-Gehalt von kleiner als 0,10 Gew.-% und niedrigem Gehalt an anionischen Verunreinigungen, insbesondere einem niedrigen Sulfatgehalt von kleiner als 1,2 Gew.-%. Lackaufstriche des in einem Lack dispergierten erfindungsgemäßen Pigmentes auf einem Schachbrettmuster zeigen eine hohe Transparenz und einen gesättigten, brillanten, gelben Farbton. Besonders hervorzuheben ist die deutlich verbesserte Transparenz im Vergleich zum nicht nachbehandelten Pigment. Dies ist ausgesprochen überraschend, da die spezifische Oberfläche der Pigmente, die im allgemeinen auch als Maßzahl für die Transparenz verwendet wird, durch die NaOH-Nachbehandlung zum Teil erheblich abnimmt und man daher eigentlich eine geringere Transparenz erwartet hätte.

Außer Lacken können auch Kunststoffe mit dem Pigment eingefärbt werden. Insbesondere eignen sich die Pigmente wegen ihres geringen Gehaltes an Verunreinigungen zur Einfärbung von Kunststoffen für Lebensmittelverpackungen. Die Verwendung der erfindungsgemäßen Pigmente zur Einfärbung von Lacken und Kunststoffen ist daher ebenfalls Gegenstand der Erfindung.

Zur Bestimmung der Mn-Gehalte werden die Proben vollständig aufgelöst und sodann werden die Mangan-Gehalte emissionsspektrometrisch ermittelt.

Die Bestimmung der Sulfat-Gehalte erfolgt nach folgendem Verfahren: Die Proben werden mit einem Vanadiumpentoxid/Eisenpulver-Gemisch als Zuschlagstoff versetzt und in einem Sauerstoffstrom auf über 1 200 °C aufgeheizt. Die dabei entstehenden Gase werden mit Hilfe einer Infrarot-Meßzelle auf ihren Gehalt an Schwefeldioxid untersucht. Der so ermittelte Gehalt wird in Sulfat umgerechnet.

Die Bestimmung der spezifischen BET-Oberfläche erfolgt nach der N₂-1-Punkt-Methode gemäß DIN 66131.

Die nachfolgenden Beispiele beschreiben die Herstellung der erfindungsgemäßen hochtransparenten, chemisch reinen, gelben Eisenoxidpigmente. Die Beispiele sollen der Illustration des Verfahrens dienen und stellen keine Einschränkung dar.

### Beispiele

### Beispiel 1

Zu 57,5 m³ einer Eisensulfatlösung mit einem FeSO₄-Gehalt von 150 g/l wurden bei einer Temperatur von 34 °C unter Rühren 50 kg Weinsäure sowie 6,3 m³ NaOH-Lösung mit einem NaOH-Gehalt von 286 g/l zugefügt. Der pH-Wert direkt im Anschluß an die NaOH-Zugabe lag bei pH 7,4. Anschließend wurde mit 1 050 m³ Luft/h begast, bis der pH-Wert auf pH 3,3 abgefallen war. Die Suspension wurde filtriert, salzfrei gewaschen. Die spezifische Oberfläche des so hergestellten Pigmentes beträgt 150 m²/g. Der Mn-Gehalt liegt bei 0,02 Gew.-% und der Sulfatgehalt bei 3,5 Gew.-%.

2 600 g Filterpaste des noch obigem Verfahren hergestellten Pigmentes mit einem Feststoffgehalt von 38,4 Gew.-% FeOOH wurden in 25 Liter 0,2 n NaOH resuspendiert. Der FeOOH-Gehalt der Suspension lag bei ca. 40 g/l. Die Temperatur betrug 29 °C. Die Suspension wurde eine Stunde gerührt, abfiltriert, salzfrei gewaschen und das Pigment getrocknet. Die spezifische Oberfläche des nachbehandelten Pigmentes beträgt 126 m²/g. Der Mn-Gehalt liegt bei 0,02 Gew.-% und der Sulfatgehalt bei 0,61 Gew.-%.

Lackaufstriche des in einem Lack dispergierten behandelten und unbehandelten Pigmentes auf einem Schwarz-Weiß-Karton zeigen, daß die Nachbehandlung zu einer deutlich sichtbaren Erhöhung der Transparenz geführt hat.

Die Analysenwerte sind zur besseren Veranschaulichung der Produkteigenschaften im Vergleich zu den Handelsprodukten Sicotrans L1915 und L1916 (Produkte der Fa. BASF), Cappoxyt 4214X (Produkt der Fa. Cappelle) und Transoxide yellow 10-30-AC-0553 (Produkt der Fa. Hilton Davis) in Tabelle 1 zusammengestellt.

### Beispiel 2

318,5 g Filterpaste eines wie unter Beispiel 1 hergestellten Pigmentes mit einem Feststoffgehalt von 31,8 Gew.-% FeOOH wurden in 2 Liter 0,2 n NaOH-Lösung resuspendiert. Der FeOOH-Gehalt der Suspension betrug ca. 50 g/l. Die Suspension wurde auf 80 °C aufgeheizt, eine Stunde gerührt, filtriert, salzfrei gewaschen und getrocknet. Die spezifische Oberfläche des nachbehandelten Pigmentes betrug 106 m²/g. Der Mn-Gehalt liegt bei 0,02 Gew.-%, der Sulfatgehalt bei 0,69 Gew.-%. Lackaufstriche des in einem Lack dispergierten behandelten und unbehandelten Pigmentes auf einem Schwarz-Weiß-Karton zeigen, daß die Nachbehandlung zu einer deutlich sichtbaren Erhöhung der Transparenz geführt hat. Die Analysenergebnisse sind in Tabelle 1 zusammengestellt.

### Beispiel 3

15 Liter einer FeSO₄-Lösung mit einem Gehalt von 150 g FeSO₄ 1 wurden mit 34,6 g einer 57 %igen Glykolsäurelösung versetzt und auf 28 °C temperiert. Unter Rühren und Stickstoffbegasung wurden innerhalb von 20 min 2,8 g NaOH-Lösung mit einem NaOH-Gehalt von 25,4 Gew.-% zugefügt. Der pH-Wert betrug nach der NaOH-Zugabe pH 7,3. Dann wurde mit einer Menge von 800 Luft/h solange begast, bis der pH-Wert auf 3,6 gefallen war. Danach wurde unter gleichzeitiger Oxidation weiter NaOH-Lösung zudosiert, wobei die Zugabe so geregelt wurde, daß der pH-Wert kleiner/gleich pH 5 gehalten wurde. Als der FeSO₄-Gehalt der Lösung auf kleiner/gleich 2 g/l abgefallen war, wurden die NaOH-Zugabe und die Oxidation beendet. Das Pigment wurde abfiltriert, salzfrei gewaschen und getrocknet.

Die spezifische Oberfläche des so hergestellten Pigmentes beträgt 165 m²/g. Der Mn-Gehalt liegt bei 0,05 Gew.-% und der Sulfatgehalt bei 2,9 Gew.-%.

25 g des so hergestellten Pigmentes wurden in 1 Liter 0,2 n Natronlauge resuspendiert und eine Stunde bei Raumtemperatur gerührt. Der pH-Wert der Suspension betrug 13,3. Das nachbehandelte Pigment wurde abfiltriert, gewaschen und getrocknet. Die spezifische Oberfläche wurde zu 147 m²/g, der Mangangehalt zu 0,05 Gew.-% und der Sulfatgehalt zu 0,55 Gew.-% bestimmt. Die Werte sind in Tabelle 1 eingetragen.

### Beispiel 4 (Vergleichsbeispiel)

Wie unter Beispiel 3 beschrieben, wurde ein hochtransparentes Pigment hergestellt. Allerdings wurde soviel NaOH zugegeben, daß der pH-Wert am Ende der Reaktion bei pH 7 lag. Das Pigment wurde filtriert und salzfrei gewaschen.

162 g Pigmentfilterpaste mit einem FeOOH-Gehalt von 30,8 Gew.-% wurden in 888 ml Wasser resuspendiert. Die Suspension hatte einen FeOOH-Gehalt von ca. 50 g/l. Dazu wurden 12 ml einer 45 %igen NaOH-Lösung gegeben. Die Suspension wurde eine Stunde bei Raumtemperatur gerührt, dann das Pigment abfiltriert, gewaschen und getrocknet.

Die spezifische Oberfläche beträgt 151 m²/g der Mangangehalt 0,15 Gew.-% und der Sulfatgehalt 0,49 Gew.-%. Das heißt, da der pH-Wert am Ende der Oxidation oberhalb pH 6 lag, ist Mangan mit ausgefällt worden. Die Werte sind ebenfalls in Tabelle 1 eingetragen.

**Tabelle 1**

| Produkt | sBET (m²/g) | Mn-Gehalt (Gew.-%) | SO₄-Gehalt (Gew.-%) |
|---|---|---|---|
| Sicotrans L 1915 | 112 | 0,04 | 2,9 |
| Sicotrans L 1916 | 100 | 0,21 | 1,25 |
| Cappoxyt 4214 x | 113 | 0,12 | 1,06 |
| Transoxide-Yellow | 111 | 0,04 | 3,4 |
| Beispiel 1 | 126 | 0,02 | 0,61 |
| Beispiel 2 | 106 | 0,02 | 0,61 |
| Beispiel 3 | 147 | 0,05 | 0,55 |
| Beispiel 4 = Gegenbeispiel zu 3 | 151 | 0,15 | 0,49 |

## Patentansprüche

1. Verfahren zur Herstellung von hochtransparenten, chemisch reinen, gelben Eisenoxidpigmenten der α-FeOOH-Modifikation, dadurch gekennzeichnet, daß
a) gelbe, hochtransparente Eisenoxidpigmente über Fäll- und Oxidationsverfahren, ausgehend von wäßrigen Eisen(II)sulfatlösungen so hergestellt werden, daß am Ende der Pigmentbildung der pH-Wert unterhalb 6, bevorzugt bei kleiner oder gleich pH 5 liegt, das Pigment abfiltriert oder absedimentiert wird, gewaschen und gegebenenfalls getrocknet wird und
b) die so erhaltenen gelben Pigmente oder der Pigmentfilterkuchen mit Natronlauge nachbehandelt werden.

2. Verfahren gemäß Anspruch 1, dadurch gekennzeichnet, daß die NaOH-Nachbehandlung in einer Suspension mit einem Pigmentgehalt von 10 bis 60 g/l erfolgt.

3. Verfahren gemäß einem der Ansprüche 1 oder 2, dadurch gekennzeichnet, daß der pH-Wert der Suspension bei der NaOH-Nachbehandlung zwischen pH 10 und pH 14 liegt.

4. Verfahren gemäß einem oder mehreren der Ansprüche 1 bis 3, dadurch gekennzeichnet, daß die NaOH-Nachbehandlung bei Temperaturen zwischen 15 °C und 90 °C, bevorzugt bei Raumtemperatur, durchgeführt wird.

5. Verfahren gemäß einem oder mehreren der Ansprüche 1 bis 4, dadurch gekennzeichnet, daß die NaOH-Nachbehandlung unter Rühren durchgeführt wird, wobei die Rührzeit zwischen 15 min und 2 h liegt.

6. Hochtransparente, gelbe Eisenoxidpigmente der α-FeOOH-Modifikation, erhältlich gemäß einem oder mehreren der Ansprüche 1 bis 5, dadurch gekennzeichnet, daß sie einen Mn-Gehalt von weniger als 0,10 Gew.-% und einen Sulfatgehalt von weniger als 1,2 Gew.-% aufweisen.

7. Verwendung der gelben Eisenoxidpigmente gemäß dem Anspruch 6 zur Einfärbung von Lacken und Kunststoffen.

## Claims

1. Process for the production of highly transparent, chemically pure, yellow iron oxide pigments of the α-FeOOH modification, characterised in that
a) yellow, highly transparent iron oxide pigments are produced by precipitation and oxidation processes, starting from aqueous iron(II) sulfate solutions, in such a manner that on completion of pigment formation the pH value is below 6, preferably less than or equal to pH 5, the pigment is filtered or settled out, washed and optionally dried and
b) the resultant yellow pigments or pigment filter cakes are post-treated with sodium hydroxide solution.

2. Process according to claim 1, characterised in that the NaOH post-treatment proceeds in a suspension with a pigment content of 10 to 60 g/l.

3. Process according to one of claims 1 or 2, characterised in that the pH value of the suspension during the NaOH post-treatment is between pH 10 and pH 14.

4. Process according to one or more of claims 1 to 3, characterised in that the NaOH post-treatment is performed at temperatures of between 15°C and 90°C, preferably at room temperature.

5. Process according to one or more of claims 1 to 4, characterised in that the NaOH post-treatment is performed with stirring, wherein the stirring time is between 15 minutes and 2 hours.

6. Highly transparent, yellow iron oxide pigments of the α-FeOOH modification according one or more of claims 1 to 5, characterised in that they have an Mn content of less than 0.10 wt.% and a sulfate content of less than 1.2 wt.%.

7. Use of the yellow iron oxide pigments according to claim 6 to colour lacquers and plastics.

## Revendications

1. Procédé pour la préparation d'oxydes de fer pigmentaires jaunes à haute transparencc et chimiquement purs, sous la forme α-FeOOH, caractérisé en ce que
a) on prépare des oxydes de fer pigmentaires jaunes à haute transparence par des opérations de précipitation et d'oxydation au départ de solutions aqueuses de sulfate ferreux, dans des conditions telles qu'à la fin de la formation du pigment, le pH soit inférieur à 6 et de préférence inférieur ou égal à 5, on sépare le pigment par filtration ou sédimentation, on le lave et le cas échéant on le sèche et
b) on soumet les pigments jaunes ainsi obtenus ou les gâteaux de filtration des pigments à un traitement complémentaire par la lessive de soude.

2. Procédé selon revendication 1, caractérisé en ce que le traitement complémentaire par NaOH est réalisé dans une suspension à une teneur en pigment de 10 à 60 g/l.

3. Procédé selon une des revendications 1 ou 2, caractérisé en ce que, lors du traitement complémentaire par NaOH, le pH de la suspension se situe entre 10 et 14.

4. Procédé selon une ou plusieurs des revendications 1 à 3, caractérisé en ce que le traitement complémentaire par NaOH est réalisé à des températures de 15 à 90°C et de préférence à température ambiante.

5. Procédé selon une ou plusieurs des revendications 1 à 4, caractérisé en ce que le traitement complémentaire par NaOH est réalisé sous agitation, avec des durées d'agitation de 15 min à 2 h.

6. Oxydes de fer pigmentaires jaunes à haute transparence sous la forme α-FeOOH, obtenus selon une ou plusieurs des revendications 1 à 5 et caractérisés en ce qu'ils ont une teneur en Mn inférieure à 0,10 % en poids et une teneur en sulfate inférieure à 1,2 % en poids.

7. Utilisation des oxydes de fer pigmentaires jaunes selon revendication 6 pour la coloration de vernis et de résines synthétiques.
